# EUROPEAN PATENT APPLICATION

(11) **EP 3 435 308 A1**
(43) Date of publication of application: **30.01.2019**
(21) Application number: 18185034.8
(22) Date of filing: 23.07.2018
(51) Int. Cl.: G06Q 20/12, G06Q 20/22, G06Q 20/40, G06F 9/445, H04L 29/08

(54) **ENHANCING WEBPAGE FUNCTIONALITY**

(30) Priority: 28.07.2017 SG 10201706158R
(71) Applicant: Mastercard Asia/Pacific Pte. Ltd., Singapore 189352 (SG)
(72) Inventor: ROSE, Ian, Red Hill, Australian Capital Territory 4059 (AU)
(74) Representative: Gill Jennings & Every LLP

(57) **Abstract**

A method for enhancing functionality of a payment webpage, the method including, in a browser application configured to display the payment webpage on a client device: obtaining payment webpage code corresponding to the payments payment webpage to be displayed; obtaining executable code; using the executable code to: identify payment elements corresponding to at least one existing payment option forming part of the payment webpage; determine at least one additional available payment option; generate additional payment elements corresponding to the at least one additional available payment option; using the payment webpage code and the additional payment elements to display the payment webpage, the payment webpage including the at least one additional available payment option to thereby enhance the functionality of the payment webpage; and, during user interaction with the payment webpage: determining user interaction with at least one of the additional payment elements in accordance with user input commands; and, using the executable code to cause a payment to be performed at least partially in accordance with the determined user interaction.

## Description

### Background of the Invention

The present invention relates to a method and system for enhancing webpage functionality.

### Description of the Prior Art

The reference in this specification to any prior publication (or information derived from it), or to any matter which is known, is not, and should not be taken as an acknowledgment or admission or any form of suggestion that the prior publication (or information derived from it) or known matter forms part of the common general knowledge in the field of endeavour to which this specification relates.

Most ecommerce merchant websites accept payment using basic payment techniques, such as credit cards or the like. The skill and cost barrier to building such a website with basic payment functionality is low, as the data elements that need to be collected, such as the Personal Account Number (PAN), expiry date and cardholder name are few, and well defined. Additionally, the processing rules for implementing the payment process are simple, and generally require little more than a pay button that submits a form and presents any errors.

However, such a basic implementation does not allow for a full range of payment facilities expected by modern payers, including but not limited to 3D-Secure and other payer authentication technologies, currency conversion, payment plans, mobile wallets, or non-card payments, such as PayPal, Soffort, SEPA, Kombini, iDEAL and the like. As a result, a merchant only providing for card payments could lose sales to their competitors.

Such payment facilities are typically complex to implement, and individually generate low revenue. For example, basic card payments may account for 80% of revenue, with 10 other facilities accounting for the remaining 20%. This presents the merchant with a difficult investment choice, where raising revenue by 20% might require a ten-fold increase in the cost of building their payment page. This in turn can hamper the ability of new payment facilities to enter the market place and reduce consumer choice.

Apart from using custom development as noted above, the merchant has one other choice, namely hosted payments. This is where a payment gateway vendor hosts the payment page for the merchant. The problem with this approach is that it does not have the look and feel of the merchant's website, which can in turn result in payer confusion and drop-out.

### Summary of the Present Invention

In one broad form an aspect of the present invention seeks to provide a method for enhancing functionality of a payment webpage, the method including, in a browser application configured to display the payment webpage on a client device: obtaining payment webpage code corresponding to the payments payment webpage to be displayed; obtaining executable code; using the executable code to: identify payment elements corresponding to at least one existing payment option forming part of the payment webpage; determine at least one additional available payment option; generate additional payment elements corresponding to the at least one additional available payment option; using the payment webpage code and the additional payment elements to display the payment webpage, the payment webpage including the at least one additional available payment option to thereby enhance the functionality of the payment webpage; and, during user interaction with the payment webpage: determining user interaction with at least one of the additional payment elements in accordance with user input commands; and, using the executable code to cause a payment to be performed at least partially in accordance with the determined user interaction.

In one embodiment the executable code is at least one of: embedded within the payment webpage code; and, retrieved from a remote server in accordance with a function call within the payment webpage code.

In one embodiment the method includes, in the browser application: using the executable code to: generate additional payment webpage code indicative of the additional payment elements; and, modify the payment webpage code by injecting the additional payment webpage code into the payment webpage code; and, generating the payment webpage based on the modified payment webpage code.

In one embodiment the method includes, in the browser application, using the executable code to determine the additional available payment options at least one of: by querying a payment gateway associated with a payment webpage owner; based on parameters forming part of a call within the payment webpage code; in accordance with available payment option rules in the executable code; and, in accordance with remotely stored available payment option data.

In one embodiment the method includes, in the browser application, using the executable code to: determine available payment options; determine the at least one existing payment option using the identified payment elements; and, determine the additional available payment options based on the available payment options and the at least one existing payment option.

In one embodiment the method includes, in the browser application, using the executable code to: determine page element criteria including at least one of: properties of the page element; a format of the page element; a name of the page element; and, available user interactions with the page element; compare the page element criteria to one or more payment element rules; and, selectively identify a page element as a payment element depending on a result of the comparison.

In one embodiment the method includes, in the browser application, using the executable code to identify a payment element based on a presence of at least one of: an entry field configured to accept characters of a credit card PAN; a sixteen character alphanumeric entry field; and, a date entry field.

In one embodiment the method includes, in the browser application, using the executable code to: determine display properties of the payment elements; and, cause the additional payment elements to be displayed in accordance with the display properties of the payment elements.

In one embodiment the display properties include at least one of: a payment element location; and, a payment element appearance.

In one embodiment the method includes, in the browser application, using the executable code to generate additional payment webpage code indicative of the additional payment elements using syntax based on payment webpage code indicative of payment elements.

In one embodiment the method includes, in the browser application, using the executable code to: determine payment details required in order to perform the at least one additional available payment option; and, generate the additional payment elements corresponding to the required payment details.

In one embodiment the additional payment elements define payment selection options corresponding to a plurality of additional available payment options, and wherein the method includes, in the browser application, using the executable code to: determine a selected payment option in accordance with user input commands; and, cause the payment to be performed using the selected payment option.

In one embodiment the method includes in the browser application, using the executable code to at least one of: direct the browser application to a third party payment page; and, generate further additional payment elements corresponding to the selected payment option.

In one embodiment the method includes in the browser application displaying the further additional payment elements by at least one of: re-rendering the payment webpage; and, displaying an overlay.

In one embodiment the method includes, in the browser application, using the executable code to: determine payment details in accordance with user interaction with the additional payment elements; and, cause the payment to be performed at least partially in accordance with the payment details.

In one embodiment the method includes, in the browser application, using the executable code to: determine an interaction sequence defining a number of steps required to perform the payment option; and, cause the payment to be performed at least partially in accordance with the payment details and interaction sequence.

In one embodiment the interaction steps define a sequence of interactions with one or more remote servers, the interactions including at least one of: providing payment details to a remote server; receiving a response from a remote server; processing a response from a remote server to determine payment information; and, providing payment information to a remote server.

In one embodiment the remote server is at least one of: a payment gateway server; a third party payment provider; and, a web server.

In one embodiment the method includes, in the browser application, using the executable code to: identify a trigger event; generate trigger elements relating to the trigger event; cause the trigger elements to be displayed; detect a trigger response in accordance with user input commands; and, cause the payment to be performed at least partially in accordance with the trigger response.

In one embodiment the method includes, in the browser application, displaying the trigger elements by at least one of: re-rendering the payment webpage; and, displaying an overlay.

In one embodiment the method includes, in the browser application, using the executable code to identify a trigger event by: determining trigger rules; determining transaction properties; and, identifying a trigger event using the trigger rules and the transaction properties.

In one embodiment the transaction properties include at least one of: payment details; a selected payment type; a payment location; a computer device location; a delivery location; and, a payment currency.

In one embodiment the method includes, in the browser application, using the executable code to: determine payment configuration data associated with the at least one additional available payment option; and, determine from the payment configuration data, at least one of: payment details required to perform the payment option; interaction steps required to perform the payment option; and, trigger rules.

In one embodiment the payment configuration data is at least one of: obtained by querying a payment gateway associated with the payment option; embodied in the executable code; and, retrieved from a remote store.

In one embodiment the method includes, in the browser application, using the executable code to, in response to completion of the transaction: generate a receipt; and, cause the receipt to be displayed.

In one embodiment the method includes, in the browser application: obtaining payment webpage HTML code; parsing the payment webpage HTML code to construct a DOM; executing Javascript code to: identify the payment elements; determine the at least one additional available payment option; generate the additional payment elements; and, update the DOM with the additional payment elements; and, causing the payment webpage to be displayed in accordance with the DOM.

In one embodiment the method includes, in the browser application: parsing CSS code to construct a CSSOM tree; constructing a render tree using the DOM and CSSOM tree; and, causing the payment webpage to be displayed in accordance with the render tree.

In one broad form an aspect of the present invention seeks to provide a system for enhancing functionality of a payment webpage, the system including a client device executing a browser application configured to display the payment webpage on the client device, wherein the browser application is configured to: obtain payment webpage code corresponding to the payments payment webpage to be displayed; obtain executable code; use the executable code to: identify payment elements corresponding to at least one existing payment option forming part of the payment webpage; determine at least one additional available payment option; generate additional payment elements corresponding to the at least one additional available payment option; use the payment webpage code and the additional payment elements to display the payment webpage, the payment webpage including the at least one additional available payment option to thereby enhance the functionality of the payment webpage; and, during user interaction with the payment webpage: determine user interaction with at least one of the additional payment elements in accordance with user input commands; and, use the executable code to cause a payment to be performed at least partially in accordance with the determined user interaction.

In one broad form an aspect of the present invention seeks to provide a method for enhancing functionality of a payment webpage, the method including, in a browser application configured to display the payment webpage on a client device: obtaining payment webpage code corresponding to the payments payment webpage to be displayed; obtaining executable code; using the executable code to: identify payment elements corresponding to at least one existing payment option forming part of the payment webpage; determine at least one additional available payment option; generate additional payment elements corresponding to the at least one additional available payment option; and, using the payment webpage code and the additional payment elements to display the payment webpage, the payment webpage including the at least one additional available payment option to thereby enhance the functionality of the payment webpage. A system for enhancing functionality of a payment webpage, the system including a client device executing a browser application configured to display the payment webpage on the client device, wherein the browser application is configured to: obtaining payment webpage code corresponding to the payments payment webpage to be displayed; obtaining executable code; using the executable code to: identify payment elements corresponding to at least one existing payment option forming part of the payment webpage; determine at least one additional available payment option; generate additional payment elements corresponding to the at least one additional available payment option; and, using the payment webpage code and the additional payment elements to display the payment webpage, the payment webpage including the at least one additional available payment option to thereby enhance the functionality of the payment webpage. A method for enhancing functionality of a payment webpage including payment elements corresponding to at least one existing payment option, the method including, in a browser application configured to display the payment webpage on a client device, during user interaction with webpage: determining user interaction with at least one additional payment element in accordance with user input commands, the at least one additional payment element corresponding to at least one additional available payment option; and, using executable code to: determine payment details in accordance with user interaction with the additional payment elements, the payment details relating to a respective additional available payment option; determine an interaction sequence defining a number of steps required to perform the respective additional available payment option; and, cause the payment to be performed at least partially in accordance with the payment details and interaction sequence.

In one broad form an aspect of the present invention seeks to provide a system for enhancing functionality of a payment webpage including payment elements corresponding to at least one existing payment option, the system including a client device executing a browser application configured to display the payment webpage on the client device, wherein the browser application is configured to, during user interaction with webpage: determine user interaction with at least one additional payment element in accordance with user input commands, the at least one additional payment element corresponding to at least one additional available payment option; and, use executable code to: determine payment details in accordance with user interaction with the additional payment elements, the payment details relating to a respective additional available payment option; determine an interaction sequence defining a number of steps required to perform the respective additional available payment option; and, cause the payment to be performed at least partially in accordance with the payment details and interaction sequence.

In one broad form, the present invention seeks to provide a non-transitory computer readable storage medium embodying thereon a program of computer readable instructions which, when executed by one or more processors of a client device, cause the client device to carry out a method for enhancing functionality of a payment webpage. The method embodying the steps of: obtaining payment webpage code corresponding to the payment webpage to be displayed; obtaining executable code; using the executable code to: identify, from the payment webpage code, payment elements corresponding to at least one existing payment option forming part of the payment webpage; determine at least one additional available payment option; generate additional payment elements corresponding to the at least one additional available payment option; using the payment webpage code and the additional payment elements to display the payment webpage, the payment webpage including the at least one additional available payment option to thereby enhance the functionality of the payment webpage; and, during user interaction with the payment webpage: determining user interaction with at least one of the additional payment elements in accordance with user input commands; and, using the executable code to cause a payment to be performed at least partially in accordance with the determined user interaction.

It will be appreciated that the broad forms of the invention and their respective features can be used in conjunction, interchangeably and/or independently, and reference to separate broad forms is not intended to be limiting.

### Brief Description of the Drawings

An example of the present invention will now be described with reference to the accompanying drawings, in which: -
Figure 1 is a flow chart of an example of a method for enhancing functionality of a webpage;
Figure 2 is a schematic diagram of a distributed computer architecture;
Figure 3 is a schematic diagram of an example of a processing system;
Figure 4 is a schematic diagram of an example of a client device;
Figures 5A to 5C are a flow chart of a specific example of a method of displaying a payment webpage with enhanced functionality;
Figure 6A is a schematic diagram of an example of a payment webpage;
Figure 6B is a schematic diagram of an example of the payment webpage of Figure 6A including enhanced functionality; and,
Figures 7A and 7B are a flow chart of an example of a process for performing a payment using a payment webpage with enhanced functionality.

### Detailed Description of the Preferred Embodiments

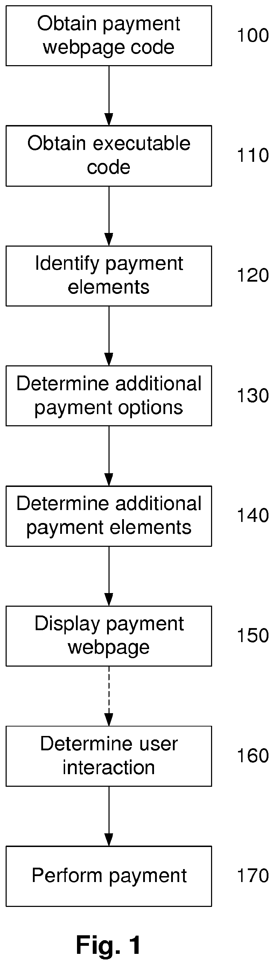

An example of a method of enhancing functionality of a payment webpage will now be described with reference to Figure 1.

For the purpose of this example, it is assumed that the method is performed utilising a client device, such as a computer system, smart phone, tablet, laptop or the like, which is in communication with one or more processing systems, such as servers, web servers or the like, to allow webpages to be displayed. Specifically, it is assumed that the method is performed at least in part utilising a browser application executed by the client device which enables webpages to be displayed. It will be appreciated that the terms client device and browser application are being used for the purpose of ease of explanation and are not intended to be restrictive. Thus, the particular nature of the client device and browser application is not important and a wide range of different configurations could be used.

It this example, at step 100 the browser application operates to obtain payment webpage code, which is typically HTML (HyperText Markup Language) code corresponding to a payment webpage to be displayed. The payment webpage code can be obtained in any appropriate manner but is typically retrieved from a web server, for example as a part of a transaction process. Thus, a user could be interacting with a merchant website in order to purchase goods or services, with the payment webpage being presented to the user as part of this process, enabling the user to pay for the respective goods and services. In such an example, the payment webpage code is therefore received from a merchant web server. However, it will be appreciated that the techniques can be used in any circumstance in which payments are made via webpages, and accordingly, other appropriate arrangements could be used.

At step 110, the browser application obtains executable code. The executable code is a code that is executable by the client device, and typically by the browser application, to allow additional functionality to be provided. The executable code can be of any appropriate form but in one example is a script, such as JavaScript or the like, which is executed by a JavaScript engine implemented by the browser application. The executable code can be obtained in any manner and could be retrieved from local storage on the client device. More typically however the executable code is either embedded within the payment webpage code, or is referenced in the payment webpage code, for example by using a function call or similar to invoke the executable code, with the executable code being retrieved from a remote store, such as a web server, or the like.

Having obtained the executable code, at step 120 the browser application executes the executable code to identify payment elements corresponding to at least one existing payment option forming part of the payment webpage. This can be achieved in any manner, but could include parsing the payment webpage code to identify tags corresponding to payment elements or particular fields meeting certain defined requirements. Alternatively, this may be achieved by examining a model, such as a document object model (DOM), which is generated by the browser application from the payment webpage code and used to display the webpage as will be described in more detail below.

At step 130, the executable code is used to determine at least one additional available payment option. In this regard, the additional available payment option corresponds to a payment mechanism an operator of the payment webpage is able to utilise, such as a payment type the merchant is able to accept, and typically one that is not currently supported as part of the payment webpage. For example, a merchant website may be configured to only take credit card payments. Nevertheless, the merchant may actually have the ability to receive payments by direct money transfer, PayPal, iDEAL, or the like, but simply not have this enabled on their website due to the complexity in encoding the necessary functionality. Accordingly, the executable code is utilised by the browser application in order to identify such additional available payment options. This can be achieved in any appropriate manner, and could involve having the browser application query a payment gateway, obtain this information from parameters in the payment webpage code, or in the function call used to invoke the executable code.

At step 140, the executable code is used by the browser application to generate additional payment elements corresponding to the at least one additional payment option. Thus, for example, this can include generating payment fields allowing payment details such as bank code details or the like to be entered by the user. Additionally and/or alternatively this could include presenting input options, such as buttons, allowing a user to select a payment option, with payment details being collected in a subsequent process, either by displaying additional input fields, or by directing the browser to a third party website. The additional payment elements can be generated in any appropriate manner but typically this involves creating relevant HTML code, with this being performed taking into account the format of existing payment elements, so as to present the additional payment elements with a look and feel similar to that of existing payment elements on the payment page, as will be described in more detail below.

Having generated the additional payment elements at step 140, the browser application then utilises the original payment webpage code and the additional payment elements to display the payment webpage. In particular, the payment webpage is displayed including the at least one additional payment option to thereby enhance the functionality of the payment webpage. Thus, the payment webpage includes the original payment options hard coded into the webpage by the webpage developer, as well as additional payment options added to the webpage dynamically by the browser application, under control of the executable code.

The user is then able to interact with either the original payment elements or the additional payment elements. In the event that the user interacts with the original payment elements, the process of performing a payment can be performed in accordance with normal payment techniques encoded in the payment webpage code. In the event that the user interacts with the additional payment elements, however, the executable code is required to facilitate the payment process.

In this regard, at step 160 the browser application determines user interaction with the at least one additional payment element in accordance with user input commands and then uses the executable code to cause a payment to be performed at step 170. In particular, the executable code can facilitate the payment process by performing interactions necessary in order to effect the payment.

Whilst a range of different processes can be used depending on the preferred implementation, in one example this involves determining payment details in accordance with user interaction with the additional payment elements, with the payment details relating to a respective additional available payment option. So for example, if the user selects to proceed with an iDEAL payment, they will be required to select a bank and enter an account number, whereas if a PayPal payment is selected, then an email address and password may be required to access the user's pre-existing PayPal account.

Following this, the browser uses the executable code to determine an interaction sequence defining a number of steps required to perform the respective additional available payment option. This could include, for example, a sequence of communications with one or more remote servers, allowing respective payment details to be provided, and various authentication or authorisation processes, performed as required. A respective interaction sequence will typically be defined for each payment option, and the sequence may be hard coded within the executable code, or alternatively may be retrieved from remotely stored data, as will be described in more detail below. The browser application can then cause the payment to be performed at least partially in accordance with the payment details and interaction sequence, by having the browser application communicate with the servers as needed, as will be described in more detail below.

In any event, it will be appreciated that the above described process provides a mechanism for allowing a payment webpage to provide enhanced functionality. In particular, the approach utilises client side executable code which is executed by the browser application displaying the payment webpage on the client device. This avoids the need for the webpage host or developer to hardcode the additional payment options into the payment webpage code, instead merely requiring them to ensure that the executable code can be correctly executed on the client device.

The executable code is used to enable the browser application to implement the additional functionality, including displaying payment elements corresponding to one or more additional available payment options, allowing these to be integrated into the webpage dynamically by the browser application, and also controlling the interactions performed by the browser to allow payments to be effected. This in turn enables the webpage to be used to perform a payment utilising either existing, or additional payment options.

Accordingly, it will be appreciated that this provides a mechanism to enhance the functionality of a payment webpage without requiring the major modification of the payment webpage code. In particular, this avoids the need for a webpage developer to understand the requirements of multiple different payment options, and the potentially complex payment interactions that are required in order to enable a payment to be performed.

A number of further features will now be described.

In one example, the executable code is either embedded within the payment webpage code, or is retrieved from a remote server in accordance with a function call within the payment webpage code. It will be appreciated that in either case minimal modification of the payment webpage code is required by the webpage host. In particular, if the executable code is embedded within the payment webpage code, this can simply be copied and pasted into the payment webpage code representing the payment webpage. Alternatively, if the executable code is retrieved from a remote server in accordance with a function call, only the function call will need to be specified in the payment webpage code, with the function call optionally including one or more parameters which can be used to control implementation of the executable code, for example to define particular available payment options.

In order to allow the browser application to render the modified payment webpage with minimal disruption, the browser application uses the executable code to generate additional payment webpage code which is indicative of the additional payment elements. The original payment webpage code can then be modified by injecting the additional payment webpage code into the original payment webpage code, allowing the browser application to then generate the payment webpage based on the modified payment webpage code in the normal way. Accordingly, it will be appreciated that the executable code is executed on the client side, in particular by the browser application, utilising this to dynamically modify the payment webpage code, and hence add in the relevant additional payment elements. This then allows the browser application to render the payment webpage in the normal manner.

In order to provide the enhanced functionality, the browser application uses the executable code to determine the additional available payment options. This can be performed in any appropriate manner, and could include querying a payment gateway associated with a payment webpage owner, such as a merchant acquirer, to determine what payment options the merchant is able to accept. Alternatively, this can be performed based on parameters forming part of a function call within the payment webpage code, allowing the merchant or developer to specify the available payment options, or by embedding particular parts of the executable code in the webpage code. In a further example, this could be based on available payment option rules, such as rules defining payments options that can be used in particular circumstances, or could be based on remotely stored available payment option data, allowing merchants or payment gateways to maintain data specifying the options that can be used.

It is also necessary to ensure that available payment options are not displayed multiple times, for example if these already form part of the payment webpage. Accordingly, the browser application, under control of the executable code, typically determines all available payment options, determines at least one existing payment option using the already identified payment elements and then determines the additional payment options based on the available payment options and the at least one existing payment options.

In order to correctly identify payment elements, the browser application must be able to distinguish a payment element from other generic page elements, such as other content presented on the payment webpage. Accordingly, the browser application uses the executable code to identify a page element as a payment element based on more or more criteria, such as properties of the page element, a format of the page element, a name of the page element, available user interactions with the page element, or the like. These are typically compared to payment element rules that define typical characteristics of payment elements, allowing the payment elements to be identified without a specific understanding of how the webpage developer may have constructed the payment webpage code. For example, if a page element is named as a credit card field this is indicative of the fact that the page element relates to a credit card payment and hence is a payment element. Similarly, a credit card field could be identified based on it being associated with an entry field configured to accept characters of a credit card PAN, such as a set character alphanumeric or other entry field, which is typically used to receive personal account numbers (PANs) of credit cards or the like. Similarly, other fields which are commonly used in payments, such as date fields for expiry dates of credit cards, can also be used to identify payment elements.

Having identified payment elements, the browser application can then determine display properties of the payment elements and cause the additional payment elements to be displayed in accordance with the display properties in the payment elements. In this regard, the payment webpage code will typically define how the payment elements should be displayed, for example using basic formatting information specified in the HTML code, which is then used together with additional style information, such as cascading style sheets (CSS), in order to control the visual appearance and location of the payment elements on the payment webpage. Accordingly, the browser application uses the executable code to cause additional payment elements to be displayed in a manner similar to the payment elements, for example by determining the particular HTML syntax or tag format used for the payment elements in the payment webpage code, so that the additional payment elements have a similar appearance and/or location.

In one example, the additional payment elements are used to collect the information required in order to perform a payment. In this example, to ensure the necessary information is collected, the browser application typically uses the executable code to determine payment details required to perform a particular payment option, and then generates the payment elements based on the required payment details. Whilst the payment details can be determined in any appropriate matter, in one example, this is performed using payment configuration data associated with the given payment option, as will be described in more detail below. In this example, once the additional payment details are generated, these can be displayed to the user, allowing the user to provide the required payment details. Thus, in this example, the additional payment elements can simply be fields required to allow the user to submit the required payment details.

Alternatively, however the additional payment elements can define payment selection options allowing a user to select one or more available payment options. In this case, during user interaction with the webpage, the executable code can be adapted to determine a selected payment option in accordance with user input commands and then cause the payment to be performed using selected payment options. This process can involve updating the payment webpage by adding additional payment elements which can in turn be used to obtain payment details. However, this is not essential and additionally and/or alternatively the process can involve directing the browser application to a third party payment page. For example, if a user selects a PayPal option, the browser application could be redirected to a PayPal webpage allowing a PayPal payment to be performed before returning the browser application to the website. In the event that further payment elements are to be displayed for example in order to allow payment details to be captured, this can be achieved by re-rendering the payment webpage showing the further additional payment elements, or alternatively could be achieved by displaying an overlay such as a popup dialog box or similar.

Having obtained payment details in accordance with user interaction with the additional payment elements, or otherwise, the browser application then uses the executable code to cause the payment to be performed at least partially in accordance with the payment details.

In one example, this is achieved by having the browser application use the executable code to determine an interaction sequence defining a number of steps required to perform the payment option, causing the payment to be performed in accordance with the payment details and the interaction sequence. The interaction sequence can define a sequence of messages that must be exchanged with one or more remote servers, for example to provide payment details to a remote server, receive a response from a remote server, process a response from a remote server, for example to determine payment information, or provide a response to a remote server. In this example, the remote servers can be any one or more of the payment gateway server, a third party provider and a web server.

Thus, for example, the executable code can cause the browser application to provide payment details to a payment gateway, receive a response from the payment gateway and then optionally interact with either the merchant web server, and/or an acquirer of the merchant, to confirm that the payment has been processed. It will be appreciated that the interaction steps will vary depending on the particular payment option selected and as these are known, these will not be described in further detail. However it will be noted that the interaction steps can be hard coded within the executable code or could be defined in payment configuration data, allowing this to be retrieved as required.

In addition to simply executing a payment, more complex interactions can also be embodied within the executable code. For example, the executable code can be used to identify a trigger to implement additional functionality. Such a trigger could correspond to a particular set of circumstances, such as when a user is purchasing a product from an overseas merchant, the system could operate to offer to perform a currency exchange into local currency.

In order to perform this, the browser uses the executable code to identify a trigger event, and then generate trigger elements relating to the trigger event, which are then displayed to the user.

In order to identify trigger events, the executable code typically operates to determine trigger rules and then identify a trigger event using the trigger rules and transaction properties. The trigger rules can be embodied within the executable code or form part of payment configuration data, whilst the nature of the transaction properties will vary depending on the implementation and the particular trigger, but could include any one or more of payment details, a selected payment type, a payment location, a client device location, a delivery location, a payment currency or the like. Thus it will be appreciated that the browser application compares transaction properties to the rules, to determine if the payment meets the criteria defined by the trigger rules.

The trigger elements could be of any appropriate form and may include information, for example indicating alternative payment currency availability, as well as input fields, for example allowing a user to accept an alternative payment currency. The trigger elements can be displayed by re-rendering the payment webpage to incorporate the trigger elements, by displaying an overlay, or pop-up box, or the like. In a similar manner to the additional payment elements, the trigger elements can be generated based on properties of payment elements to thereby maintain the look and feel of the payment webpage and the payment process.

A trigger response is then detected by the executable code in accordance with user input commands, allowing an appropriate action to be performed, such as allowing the payment to be performed at least partially in accordance with the trigger response.

As mentioned above, payment configuration data can be used in order to facilitate the process, for example to allow payment details, interaction sequence and/or triggers associated with a payment option to be determined. Whilst the payment configuration data can be embodied within the executable code, so that executing the executable code will inherently ensure the correct additional payment elements are generated, and correct interactions performed, this is not essential and alternatively payment configuration data can be stored remotely for each of a plurality of different payment options, with configuration data being retrieved as required during execution. This has the advantage that as new payment processes are implemented or existing payment processes are changed, configuration data can be updated centrally, with this change being automatically reflected as enhanced payment webpages are generated, even if this is done using executable code configured before the changes to the payment processes. It will be appreciated that in this example, payment configuration data for multiple payment options could be stored centrally, but alternatively payment configuration data for a particular payment option could be stored by the payment gateway providing the payment option. This allows every payment provider to define their own payment configuration data so that they control the manner in which payments are processed.

In one example, at the end of the payment process the browser application can use the executable code to generate a receipt and cause the receipt to be displayed. The receipt can be displayed by displaying an additional receipt webpage, which is a separate webpage to the payment webpage, or alternatively could be achieved by displaying an overlay such as a dialog box or the like. The receipt can contain information provided as part of the payment process, such as an indication of the payment option used, a reference or confirmation number, an indication of an amount paid, or any other relevant information.

In the above described method, the browser application typically displays the webpage utilising a substantially normal display process. Thus, this will include obtaining the HTML code, parsing the HTML code to construct a DOM, executing the JavaScript code to identify the payment elements, determining the at least one additional payment option, generating the additional payment elements and updating the DOM with the additional payment elements before causing the payment webpage to be displayed in accordance with the DOM. Following this, the browser application will pass CSS code to construct a CSSOM tree, constructing a render tree using the DOM and the CSSOM tree, and causing the payment webpage to be displayed in accordance with the render tree. Thus it will be appreciated that no modification of browser operation is required, allowing the process to be easily implemented.

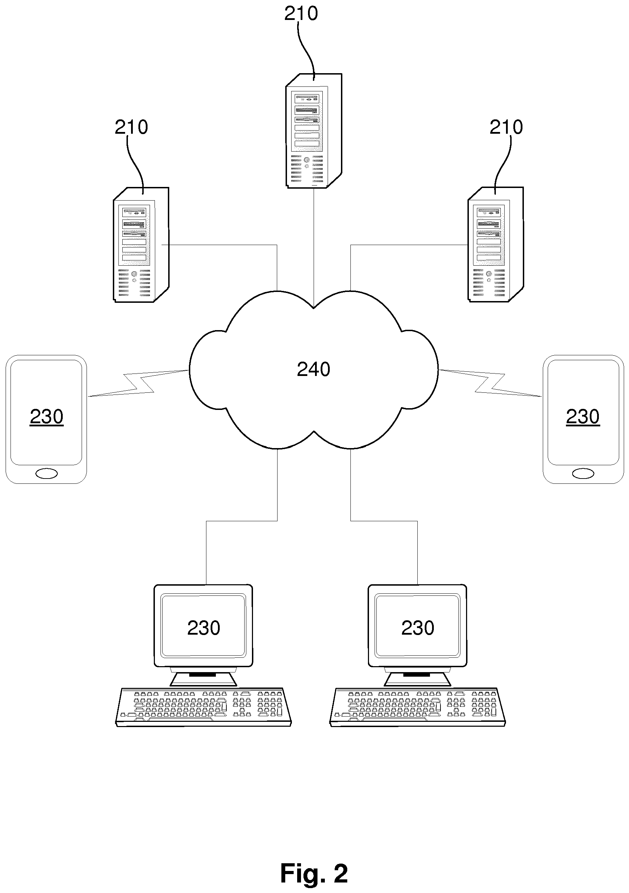

In one example, the process is performed by one or more processing systems operating as part of a distributed architecture, an example of which will now be described with reference to Figure 2.

In this example, a number of processing systems 210 are provided coupled to one or more client devices 230, via one or more communications networks 240, such as the Internet, and/or a number of local area networks (LANs).

Any number of processing systems 210 and client devices 230 could be provided, and the current representation is for the purpose of illustration only. The configuration of the networks 240 is also for the purpose of example only, and in practice the processing systems 210 and client devices 230 can communicate via any appropriate mechanism, such as via wired or wireless connections, including, but not limited to mobile networks, private networks, such as an 802.11 networks, the Internet, LANs, WANs, or the like, as well as via direct or point-to-point connections, such as Bluetooth, or the like.

In this example, the processing systems 210 are adapted to provide services accessed via an interface displayed via the client devices 230. Whilst the processing systems 210 are shown as single entities, it will be appreciated they could include a number of processing systems distributed over a number of geographically separate locations, for example as part of a cloud based environment. Thus, the above described arrangements are not essential and other suitable configurations could be used.

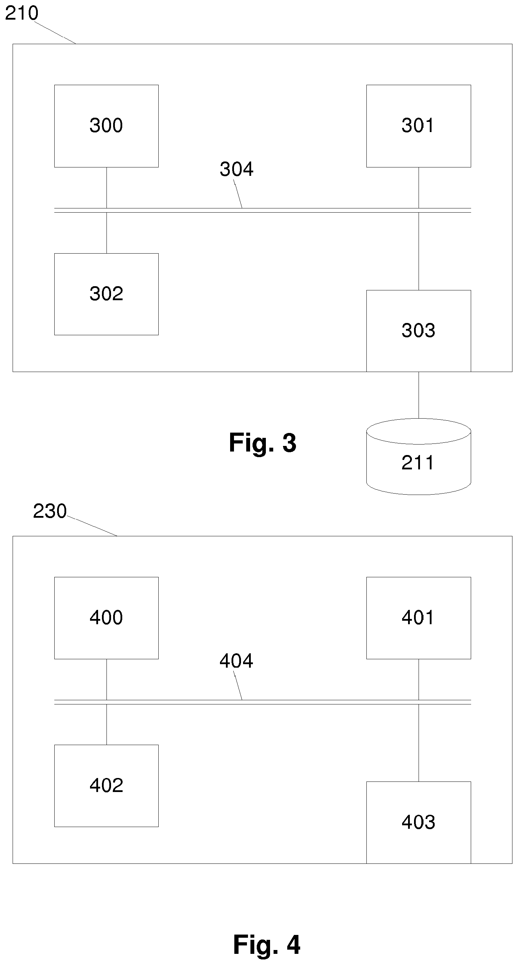

An example of a suitable processing system 210 is shown in Figure 3. In this example, the processing system 210 includes at least one microprocessor 300, a memory 301, an optional input/output device 302, such as a keyboard and/or display, and an external interface 303, interconnected via a bus 304 as shown. In this example the external interface 303 can be utilised for connecting the processing system 210 to peripheral devices, such as the communications networks 230, databases 211, other storage devices, or the like. Although a single external interface 303 is shown, this is for the purpose of example only, and in practice multiple interfaces using various methods (eg. Ethernet, serial, USB, wireless or the like) may be provided.

In use, the microprocessor 300 executes instructions in the form of applications software stored in the memory 301 to allow the required processes to be performed. The applications software may include one or more software modules, and may be executed in a suitable execution environment, such as an operating system environment, or the like.

Accordingly, it will be appreciated that the processing system 210 may be formed from any suitable processing system, such as a suitably programmed PC, web server, network server, or the like. In one particular example, the processing system 210 is a standard processing system such as an Intel Architecture based processing system, which executes software applications stored on non-volatile (e.g., hard disk) storage, although this is not essential. However, it will also be understood that the processing system could be any electronic processing device such as a microprocessor, microchip processor, logic gate configuration, firmware optionally associated with implementing logic such as an FPGA (Field Programmable Gate Array), or any other electronic device, system or arrangement.

As shown in Figure 4, in one example, the client device 230 includes at least one microprocessor 400, a memory 401, an input/output device 402, such as a keyboard and/or display, an external interface 403, and typically a card reader 404, interconnected via a bus 405 as shown. In this example the external interface 403 can be utilised for connecting the transaction terminal 220 to peripheral devices, such as the communications networks 240 databases, other storage devices, or the like. Although a single external interface 403 is shown, this is for the purpose of example only, and in practice multiple interfaces using various methods (eg. Ethernet, serial, USB, wireless or the like) may be provided. The card reader 404 can be of any suitable form and could include a magnetic card reader, or contactless reader for reading smartcards, or the like.

In use, the microprocessor 400 executes instructions in the form of applications software stored in the memory 401, and to allow communication with one of the processing systems 210.

Accordingly, it will be appreciated that the client device 230 be formed from any suitably programmed processing system and could include suitably programmed PCs, Internet terminal, lap-top, or hand-held PC, a tablet, a smart phone, or the like. However, it will also be understood that the client device 230 can be any electronic processing device such as a microprocessor, microchip processor, logic gate configuration, firmware optionally associated with implementing logic such as an FPGA (Field Programmable Gate Array), or any other electronic device, system or arrangement.

Examples of the processes for generating an enhanced payment webpage and performing payments will now be described in further detail. For the purpose of these examples it is assumed that one or more respective processing systems 210 are servers, and include webservers that host webpages, and servers forming part of a payment network, such as a payment gateway or the like. The servers 210 typically execute processing device software, allowing relevant actions to be performed, with actions performed by the server 210 being performed by the processor 300 in accordance with instructions stored as applications software in the memory 301 and/or input commands received from a user via the I/O device 302.

It will also be assumed that the client devices 230 implement browser applications allowing web browsing to be performed, and may also optionally include other applications, such as mobile wallets or the like, to allow payments to be performed. It will be assumed that actions performed by the client devices 230, are performed by the processor 400 in accordance with instructions stored as applications software in the memory 401 and/or input commands received from a user via the I/O device 402.

However, it will be appreciated that the above described configuration assumed for the purpose of the following examples is not essential, and numerous other configurations may be used. It will also be appreciated that the partitioning of functionality between the different processing systems may vary, depending on the particular implementation.

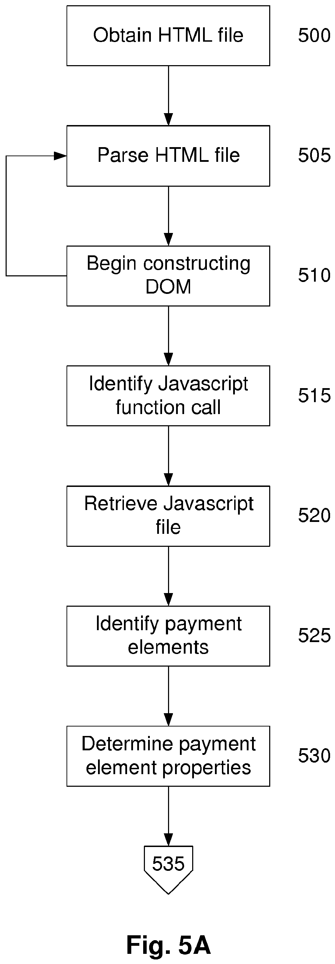

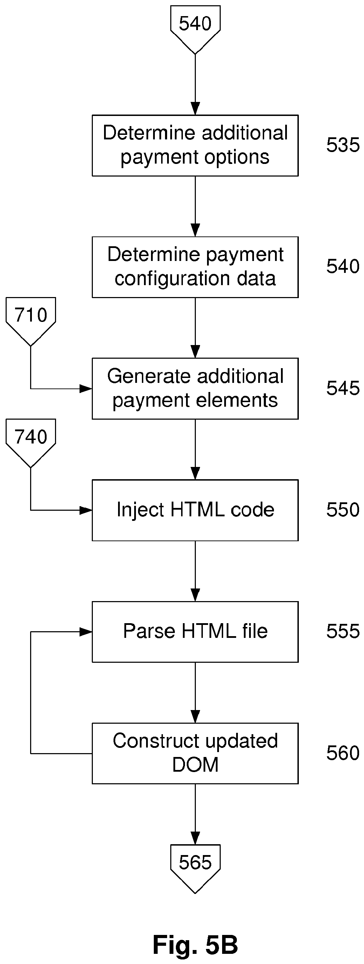

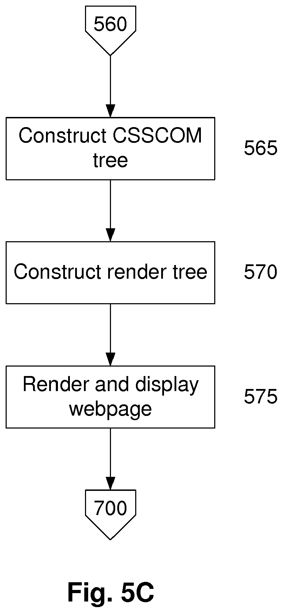

A specific example of a payment process will now be described with reference to Figures 5A to 5C. For the purpose of this example, it is assumed that a payment is performed as part of a transaction between a merchant and a user, in the form of a customer, although this is not essential and the techniques will equally apply to a range of different circumstances.

In this example, at step 500 the client device 230 receives an HTML file corresponding to a payment webpage. This is typically performed as part of a normal payment process and will involve the browser application of the client device 230 receiving the HTML code from a web server 210 hosting the merchant's website.

At step 505 the browser application parses the HTML file and begins constructing a DOM at step 510. It will be appreciated that this process is ongoing with the DOM being progressively constructed as the HTML file is parsed and new objects within the HTML file identified.

During this process, at step 515 a JavaScript function call is identified, which causes the browser application to retrieve the JavaScript file at step 520. The JavaScript function call will typically specify a location from which the JavaScript file should be retrieved as will be appreciated by persons skilled in the art. The JavaScript function call may also specify additional information, such as payment options which are to be made available as part of the enhanced payment webpage. It will be appreciated that as an alternative to these steps, the JavaScript code could be contained within the HTML code and executed when the browser reaches the JavaScript code while parsing the HTML code.

At step 525 the browser application uses the JavaScript code to identify payment elements within the HTML file. The payment elements will typically be identified based on a range of different factors, such as a field name, field type, field size, or the like. The manner in which this can be achieved will vary depending upon the preferred implementation and will be understood by a person skilled in the art.

At step 530 the browser application operates to determine properties of the identified payment elements. The properties could include information, such as formatting tags associated the payment elements in the HTML file, which in turn relate to the display location and/or appearance of the payment elements when these are ultimately rendered on the webpage. This may also involve analysis of CSS style sheets as will be appreciated by persons skilled in the art.

At step 535 the JavaScript code causes the browser application to determine one or more additional payment options. The additional payment options are determined either based on the function call, by querying a payment gateway 210 associated with the merchant, or in accordance with defined rules, for example which specify the payment options that a merchant must legally provide to meet local legislative requirements. It will also be appreciated that this process may involve confirming that any identified available payment options are not already provided for by the payment webpage, to avoid duplication of payment options when the enhanced payment webpage is created.

At step 540 payment configuration data associated with each of the additional payment options are determined, for example by retrieving this from a remote server 210. The payment configuration data can be used to control how the additional payment option is to be implemented, allowing the browser application to use the configuration data to generate additional payment elements at step 545. For example, the payment configuration data can specify what additional payment elements are to be used, including whether these are to be used to determine payment details, or whether the additional payment elements should merely be used to select one of a number of available payment options.

The additional payment elements are generated as HTML code, with this code being based on the nature of the payment element to be generated, as well as the formatting of the existing payment elements, for example by using similar HTML formatting tags. The new code is then injected into the original HTML code at step 550.

At step 555 the process continues by parsing the modified HTML file and constructing an updated DOM at step 560, with the updated DOM being used together with a CSSCOM tree, generated at step 565, to generate a render tree at step 570, which is in turn used to render and display the payment webpage.

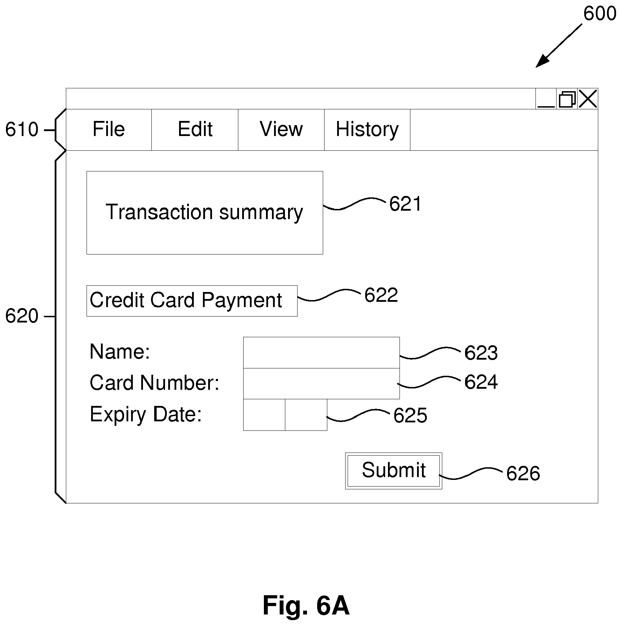

An example of a payment webpage is shown in Figure 6A.

In this example, the payment webpage is displayed in a browser application user interface 600, which typically includes a menu bar 610 and browser window 620, in which the webpage is displayed. In this example, the payment webpage includes a transaction summary box 621 which may contain information regarding the transaction, such as details of one or more goods that have been purchased and an associated purchase price. The payment webpage includes a credit card payment header 622, signifying a credit card payment option, and fields 623, 624, 625 into which the user can enter a name, PAN (card number) and expiry date, which are the payment details required in order to process a credit card payment. Once the information has been entered the submit button 626 can be selected causing a payment to be implemented. It will be appreciated that this payment webpage therefore provides limited functionality and specifically only allows for credit card payments.

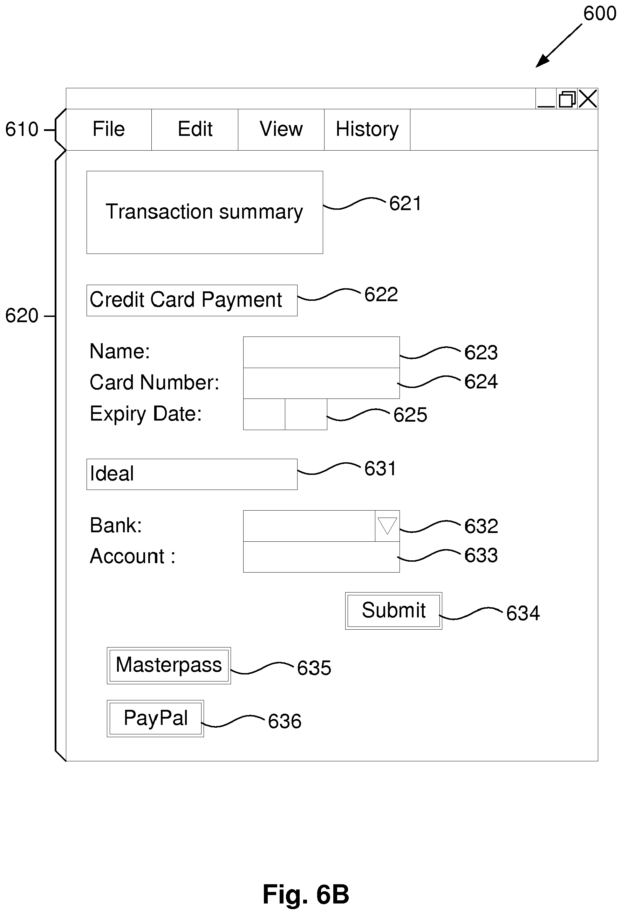

An example of an alternative modified payment webpage that provides enhanced functionality is shown in Figure 6B.

In this example, the browser application window 620 displays a webpage including additional payment elements. In this example, the additional payments elements include an iDEAL payment header 631 associated with an iDEAL payment option, and associated fields 632, 633 allowing a user to select a bank from a drop down list and enter an associated account number. A submit button 634 is provided allowing the user to submit either the credit card payment or the iDEAL payment details.

Additionally, payment elements corresponding to Masterpass and PayPal are provided as shown at 635, 636 which could be used to redirect a user to Masterpass and PayPal payment processes.

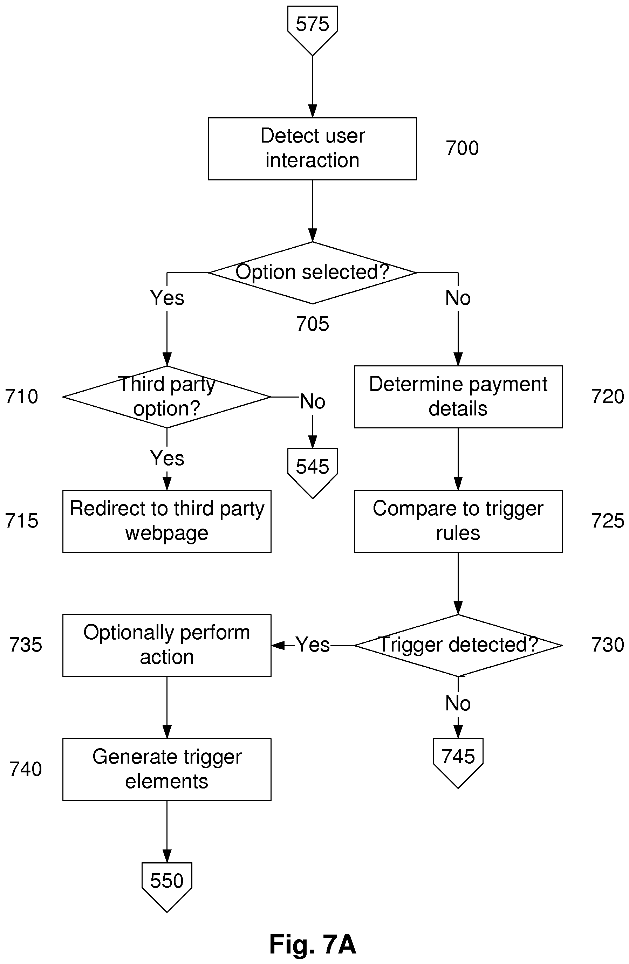

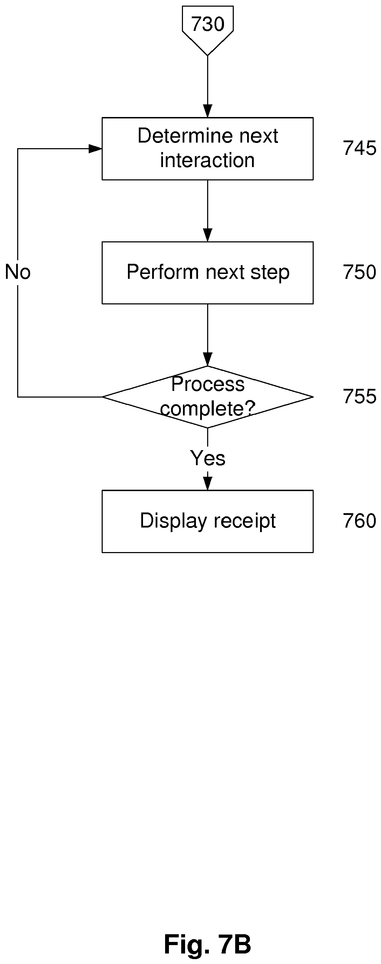

An example of the process for performing a transaction will now be described with reference to Figures 7A and 7B.

In this example, at step 700 user interaction with the webpage is detected by the browser application. At step 705 the browser application determines whether the user has selected an option, such as a Masterpass or PayPal option 635, 636 or entered payment details.

If an option has been selected, at step 710 the browser application determines if this is a third party option and if so redirects the browser application to a third party website at step 715, for example allowing a PayPal payment to be made via the PayPal website.

Otherwise, the process can return to step 545, allowing additional payment elements associated with the selected payment option to be determined and displayed, for example allowing the user to enter a username and password so as to proceed with a Masterpass payment. These additional payment elements can be used to request payment details and can then be displayed utilising a manner similar to that previously described, for example by re-rendering the payment page to show additional payment elements requesting the additional details, or by displaying an overlay such as dialog box or the like. It will be appreciated that this mechanism can be used to allow payment detail elements to only be displayed for relevant selected options which can help declutter the payment webpage.

Alternatively, if the user is entering payment details, the payment details are determined at step 720, with the browser application then comparing these to trigger rules at step 725, in order to detect trigger events at step 730. For example, if payment is in a currency that differs from the user's local currency, this can be detected, with the process then proceeding to step 735 to optionally perform an action, before allowing trigger elements to be generated, which can then be displayed by returning to step 550 to modify the webpage HTML code, and re-render the webpage. Alternatively, the trigger elements may be displayed as an overlay with these being utilised to query whether the user wishes to perform certain actions. This process can be used to perform actions, such as converting the payment amount into a local currency amount, with the trigger elements then being used to display information to the user, such as an indication of the converted currency amount, and optionally obtain further input, such as allowing the user to select whether or not to proceed with the converted payment amount. It will be appreciated however that this may require that actions are performed with the process returning to generate an updated payment page once the action has been completed, for example showing a new payment amount.

Otherwise, at step 745 the browser application determines the next interaction in an interaction sequence associated with the particular payment. This sequence is typically specified in the payment configuration data retrieved at step 540 and will set out the interactions required to perform the payment, including details of relevant communications with one or more of the servers 210. At step 750, the browser application performs the next interaction, before determining if the payment is complete at step 755. If not, the process returns to step 745 to determine a next interaction repeating this until the payment is complete, at which point the process proceeds to step 755 to display a receipt.

Accordingly, it will be appreciated that the above described arrangement allows a webpage to be updated at the client side in order to allow additional payment functionality to be implemented, without requiring modification of the webpage code by the merchant or a developer. Instead additional functionality is implemented by executing code, such as JavaScript code, which allows the browser application to dynamically adjust the payment webpage, and then subsequently perform any required interactions with remote servers, thereby enabling the payment to be performed.

Throughout this specification and claims which follow, unless the context requires otherwise, the word "comprise", and variations such as "comprises" or "comprising", will be understood to imply the inclusion of a stated integer or group of integers or steps but not the exclusion of any other integer or group of integers.

Persons skilled in the art will appreciate that numerous variations and modifications will become apparent. All such variations and modifications which become apparent to persons skilled in the art, should be considered to fall within the spirit and scope of the invention broadly appearing before described.

The following are particularly preferred aspects according to the present disclosure.

Numbered clause 1. A method for enhancing functionality of a payment webpage, the method including, in a browser application configured to display the payment webpage on a client device:
a) obtaining payment webpage code corresponding to the payment webpage to be displayed;
b) obtaining executable code;
c) using the executable code to:
   i) identify, from the payment webpage code, payment elements corresponding to at least one existing payment option forming part of the payment webpage;
   ii) determine at least one additional available payment option;
   iii) generate additional payment elements corresponding to the at least one additional available payment option;
d) using the payment webpage code and the additional payment elements to display the payment webpage, the payment webpage including the at least one additional available payment option to thereby enhance the functionality of the payment webpage; and,
e) during user interaction with the payment webpage:
   i) determining user interaction with at least one of the additional payment elements in accordance with user input commands; and,
   ii) using the executable code to cause a payment to be performed at least partially in accordance with the determined user interaction.

Numbered clause 2. A method according to numbered clause 1, wherein the executable code is at least one of:
a) embedded within the payment webpage code; and,
b) retrieved from a remote server in accordance with a function call within the payment webpage code.

Numbered clause 3. A method according to numbered clauses 1 or 2, wherein the method includes, in the browser application:
a) using the executable code to:
   i) generate additional payment webpage code indicative of the additional payment elements; and,
   ii) modify the payment webpage code by injecting the additional payment webpage code into the payment webpage code; and,
b) generating the payment webpage based on the modified payment webpage code.

Numbered clause 4. A method according to any one of numbered clauses 1 to 3, wherein the method includes, in the browser application, using the executable code to determine the additional available payment options at least one of:
a) by querying a payment gateway associated with a payment webpage owner;
b) based on parameters forming part of a call within the payment webpage code;
c) in accordance with available payment option rules in the executable code; and,
d) in accordance with remotely stored available payment option data.

Numbered clause 5. A method according to any one of numbered clauses 1 to 4, wherein the method includes, in the browser application, using the executable code to:
a) determine available payment options;
b) determine the at least one existing payment option using the identified payment elements; and,
c) determine the additional available payment options based on the available payment options and the at least one existing payment option.

Numbered clause 6. A method according to any one of numbered clauses 1 to 5, wherein the method includes, in the browser application, using the executable code to:
a) determine page element criteria including at least one of:
   i) properties of the page element;
   ii) a format of the page element;
   iii) a name of the page element; and,
   iv) available user interactions with the page element;
b) compare the page element criteria to one or more payment element rules; and,
c) selectively identify a page element as a payment element depending on a result of the comparison.

Numbered clause 7. A method according to numbered clause 6, wherein the method includes, in the browser application, using the executable code to identify a payment element based on a presence of at least one of:
a) an entry field configured to accept characters of a payment card PAN;
b) a sixteen character alphanumeric entry field; and,
c) a date entry field.

Numbered clause 8. A method according to any one of numbered clauses 1 to 7, wherein the method includes, in the browser application, using the executable code to:
a) determine display properties of the payment elements; and,
b) cause the additional payment elements to be displayed in accordance with the display properties of the payment elements,
wherein the display properties include at least one of:
c) a payment element location; and,
d) a payment element appearance.
and wherein the method includes, in the browser application, using the executable code to generate additional payment webpage code indicative of the additional payment elements using syntax based on payment webpage code indicative of payment elements.

Numbered clause 9. A method according to any one of numbered clauses 1 to 8, wherein the method includes, in the browser application, using the executable code to:
a) determine payment details required in order to perform the at least one additional available payment option; and,
b) generate the additional payment elements corresponding to the required payment details.

Numbered clause 10. A method according to any one of numbered clauses 1 to 8, wherein the additional payment elements define payment selection options corresponding to a plurality of additional available payment options, and wherein the method includes, in the browser application, using the executable code to:
a) determine a selected payment option in accordance with user input commands; and,
b) cause the payment to be performed using the selected payment option,
wherein the method includes in the browser application, using the executable code to at least one of:
c) direct the browser application to a third party payment page; and,
d) generate further additional payment elements corresponding to the selected payment option,
and wherein the method includes, in the browser application, displaying the further additional payment elements by at least one of:
e) re-rendering the payment webpage; and,
f) displaying an overlay.

Numbered clause 11. A method according to any one of numbered clauses 1 to 10, wherein the method includes, in the browser application, using the executable code to:
a) determine payment details in accordance with user interaction with the additional payment elements; and,
b) cause the payment to be performed at least partially in accordance with the payment details.

Numbered clause 12. A method according to any one of numbered clauses 1 to 11, wherein the method includes, in the browser application, using the executable code to:
a) determine an interaction sequence defining one or more steps required to perform the at least one additional available payment option; and,
b) cause the payment to be performed at least partially in accordance with the payment details and interaction sequence,
wherein the interaction steps define a sequence of interactions with one or more remote servers, the interactions including at least one of:
c) providing payment details to a remote server;
d) receiving a response from a remote server;
e) processing a response from a remote server to determine payment information; and,
f) providing payment information to a remote server.
and wherein the remote server is at least one of:
g) a payment gateway server;
h) a third party payment provider; and,
i) a web server.

Numbered clause 13. A method according to any one of numbered clauses 1 to 12, wherein the method includes, in the browser application, using the executable code to:
a) identify a trigger event;
b) generate trigger elements relating to the trigger event;
c) cause the trigger elements to be displayed;
d) detect a trigger response in accordance with user input commands; and,
e) cause the payment to be performed at least partially in accordance with the trigger response.
wherein the method includes, in the browser application, displaying the trigger elements by at least one of:
f) re-rendering the payment webpage; and,
g) displaying an overlay,
wherein the method includes, in the browser application, using the executable code to identify a trigger event by:
h) determining trigger rules;
i) determining transaction properties; and,
j) identifying a trigger event using the trigger rules and the transaction properties, and wherein the transaction properties include at least one of:
k) payment details;
l) a selected payment type;
m) a payment location;
n) a computer device location;
o) a delivery location; and,
p) a payment currency.

Numbered clause 14. A method according to any one of numbered clauses 1 to 13, wherein the method includes, in the browser application, using the executable code to:
a) determine payment configuration data associated with the at least one additional available payment option; and,
b) determine from the payment configuration data, at least one of:
   i) payment details required to perform the payment option;
   ii) interaction steps required to perform the payment option; and,
   iii) trigger rules.

Numbered clause 15. A method according to numbered clause 14, wherein the payment configuration data is at least one of:
a) obtained by querying a payment gateway associated with the payment option;
b) embodied in the executable code; and,
c) retrieved from a remote store.

Numbered clause 16. A method according to any one of numbered clauses 1 to 15, wherein the method includes, in the browser application, using the executable code to, in response to completion of the transaction:
a) generate a receipt; and,
b) cause the receipt to be displayed.

Numbered clause 17. A method according to any one of numbered clauses 1 to 16, wherein the method includes, in the browser application:
a) obtaining payment webpage HTML code;
b) parsing the payment webpage HTML code to construct a DOM;
c) executing Javascript code to:
   i) identify the payment elements;
   ii) determine the at least one additional available payment option;
   iii) generate the additional payment elements; and,
   iv) update the DOM with the additional payment elements; and,
d) causing the payment webpage to be displayed in accordance with the DOM,
and wherein the method includes, in the browser application:
e) parsing CSS code to construct a CSSOM tree;
f) constructing a render tree using the DOM and CSSOM tree; and,
g) causing the payment webpage to be displayed in accordance with the render tree.

Numbered clause 18. A system for enhancing functionality of a payment webpage, the system including a client device executing a browser application configured to display the payment webpage on the client device, wherein the browser application is configured to:
a) obtain payment webpage code corresponding to the payment webpage to be displayed;
b) obtain executable code;
c) use the executable code to:
   i) identify, from the payment webpage code, payment elements corresponding to at least one existing payment option forming part of the payment webpage;
   ii) determine at least one additional available payment option;
   iii) generate additional payment elements corresponding to the at least one additional available payment option;
d) use the payment webpage code and the additional payment elements to display the payment webpage, the payment webpage including the at least one additional available payment option to thereby enhance the functionality of the payment webpage; and,
e) during user interaction with the payment webpage:
   i) determine user interaction with at least one of the additional payment elements in accordance with user input commands; and,
   ii) use the executable code to cause a payment to be performed at least partially in accordance with the determined user interaction.

Numbered clause 19. A method for enhancing functionality of a payment webpage, the method including, in a browser application configured to display the payment webpage on a client device:
a) obtaining payment webpage code corresponding to the payment webpage to be displayed;
b) obtaining executable code;
c) using the executable code to:
   i) identify, from the payment webpage code, payment elements corresponding to at least one existing payment option forming part of the payment webpage;
   ii) determine at least one additional available payment option;
   iii) generate additional payment elements corresponding to the at least one additional available payment option; and,
d) using the payment webpage code and the additional payment elements to display the payment webpage, the payment webpage including the at least one additional available payment option to thereby enhance the functionality of the payment webpage.

Numbered clause 20. A system for enhancing functionality of a payment webpage, the system including a client device executing a browser application configured to display the payment webpage on the client device, wherein the browser application is configured to:
a) obtain payment webpage code corresponding to the payment webpage to be displayed;
b) obtain executable code;
c) use the executable code to:
   i) identify, from the payment webpage code, payment elements corresponding to at least one existing payment option forming part of the payment webpage;
   ii) determine at least one additional available payment option;
   iii) generate additional payment elements corresponding to the at least one additional available payment option; and,
d) use the payment webpage code and the additional payment elements to display the payment webpage, the payment webpage including the at least one additional available payment option to thereby enhance the functionality of the payment webpage.

Numbered clause 21. A method for enhancing functionality of a payment webpage including payment elements corresponding to at least one existing payment option, the method including, in a browser application configured to display the payment webpage on a client device, during user interaction with webpage:
a) determining user interaction with at least one additional payment element in accordance with user input commands, the at least one additional payment element corresponding to at least one additional available payment option; and,
b) using executable code to:
   i) determine payment details in accordance with user interaction with the additional payment elements, the payment details relating to a respective additional available payment option;
   ii) determine an interaction sequence defining one or more steps required to perform the respective additional available payment option; and,
   iii) cause the payment to be performed at least partially in accordance with the payment details and interaction sequence.

Numbered clause 22. A non-transitory computer readable storage medium embodying thereon a program of computer readable instructions which, when executed by one or more processors of a client device, cause the client device to carry out a method for enhancing functionality of a payment webpage, the method embodying the steps of:
a) obtaining payment webpage code corresponding to the payment webpage to be displayed;
b) obtaining executable code;
c) using the executable code to:
   i) identify, from the payment webpage code, payment elements corresponding to at least one existing payment option forming part of the payment webpage;
   ii) determine at least one additional available payment option;
   iii) generate additional payment elements corresponding to the at least one additional available payment option;
d) using the payment webpage code and the additional payment elements to display the payment webpage, the payment webpage including the at least one additional available payment option to thereby enhance the functionality of the payment webpage; and,
e) during user interaction with the payment webpage:
   i) determining user interaction with at least one of the additional payment elements in accordance with user input commands; and,
   ii) using the executable code to cause a payment to be performed at least partially in accordance with the determined user interaction.

Numbered clause 23. A system for enhancing functionality of a payment webpage including payment elements corresponding to at least one existing payment option, the system including a client device executing a browser application configured to display the payment webpage on the client device, wherein the browser application is configured to, during user interaction with the payment webpage:
a) determine user interaction with at least one additional payment element in accordance with user input commands, the at least one additional payment element corresponding to at least one additional available payment option; and,
b) use executable code to:
   i) determine payment details in accordance with user interaction with the additional payment elements, the payment details relating to a respective additional available payment option;
   ii) determine an interaction sequence defining one or more steps required to perform the respective additional available payment option; and,
   iii) cause the payment to be performed at least partially in accordance with the payment details and interaction sequence.

## Claims

1. A method for enhancing functionality of a payment webpage, the method including, in a browser application configured to display the payment webpage on a client device:
a) obtaining payment webpage code corresponding to the payment webpage to be displayed;
b) obtaining executable code;
c) using the executable code to:
i) identify, from the payment webpage code, payment elements corresponding to at least one existing payment option forming part of the payment webpage;
ii) determine at least one additional available payment option;
iii) generate additional payment elements corresponding to the at least one additional available payment option;
d) using the payment webpage code and the additional payment elements to display the payment webpage, the payment webpage including the at least one additional available payment option to thereby enhance the functionality of the payment webpage; and,
e) during user interaction with the payment webpage:
i) determining user interaction with at least one of the additional payment elements in accordance with user input commands; and,
ii) using the executable code to cause a payment to be performed at least partially in accordance with the determined user interaction.

2. A method according to claim 1, wherein the executable code is at least one of:
a) embedded within the payment webpage code; and,
b) retrieved from a remote server in accordance with a function call within the payment webpage code.

3. A method according to claim 1 or claim 2, wherein the method includes, in the browser application:
a) using the executable code to:
i) generate additional payment webpage code indicative of the additional payment elements; and,
ii) modify the payment webpage code by injecting the additional payment webpage code into the payment webpage code; and,
b) generating the payment webpage based on the modified payment webpage code.

4. A method according to any one of claims 1 to 3, wherein the method includes, in the browser application, using the executable code to determine the additional available payment options at least one of:
a) by querying a payment gateway associated with a payment webpage owner;
b) based on parameters forming part of a call within the payment webpage code;
c) in accordance with available payment option rules in the executable code; and,
d) in accordance with remotely stored available payment option data.

5. A method according to any one of claims 1 to 4, wherein the method includes, in the browser application, using the executable code to:
a) determine available payment options;
b) determine the at least one existing payment option using the identified payment elements; and,
c) determine the additional available payment options based on the available payment options and the at least one existing payment option.

6. A method according to any one of claims 1 to 5, wherein the method includes, in the browser application, using the executable code to:
a) determine page element criteria including at least one of:
i) properties of the page element;
ii) a format of the page element;
iii) a name of the page element; and,
iv) available user interactions with the page element;
b) compare the page element criteria to one or more payment element rules; and,
c) selectively identify a page element as a payment element depending on a result of the comparison,
and preferably the method includes, in the browser application, using the executable code to identify a payment element based on a presence of at least one of:
d) an entry field configured to accept characters of a payment card PAN;
e) a sixteen character alphanumeric entry field; and,
f) a date entry field.

7. A method according to any one of claims 1 to 6, wherein the method includes, in the browser application, using the executable code to:
a) determine display properties of the payment elements; and,
b) cause the additional payment elements to be displayed in accordance with the display properties of the payment elements,
wherein the display properties include at least one of:
c) a payment element location; and,
d) a payment element appearance.
and wherein the method includes, in the browser application, using the executable code to generate additional payment webpage code indicative of the additional payment elements using syntax based on payment webpage code indicative of payment elements.

8. A method according to any one of claims 1 to 7, wherein the method includes, in the browser application, using the executable code to:
a) determine payment details required in order to perform the at least one additional available payment option; and,
b) generate the additional payment elements corresponding to the required payment details.

9. A method according to any one of claims 1 to 7, wherein the additional payment elements define payment selection options corresponding to a plurality of additional available payment options, and wherein the method includes, in the browser application, using the executable code to:
a) determine a selected payment option in accordance with user input commands; and,
b) cause the payment to be performed using the selected payment option,
wherein the method includes in the browser application, using the executable code to at least one of:
c) direct the browser application to a third party payment page; and,
d) generate further additional payment elements corresponding to the selected payment option,
and wherein the method includes, in the browser application, displaying the further additional payment elements by at least one of:
e) re-rendering the payment webpage; and,
f) displaying an overlay.

10. A method according to any one of claims 1 to 9, wherein the method includes, in the browser application, using the executable code to:
a) determine payment details in accordance with user interaction with the additional payment elements; and,
b) cause the payment to be performed at least partially in accordance with the payment details.

11. A method according to any one of claims 1 to 10, wherein the method includes, in the browser application, using the executable code to:
a) determine an interaction sequence defining one or more steps required to perform the at least one additional available payment option; and,
b) cause the payment to be performed at least partially in accordance with the payment details and interaction sequence,
wherein the interaction steps define a sequence of interactions with one or more remote servers, the interactions including at least one of:
c) providing payment details to a remote server;
d) receiving a response from a remote server;
e) processing a response from a remote server to determine payment information; and,
f) providing payment information to a remote server.
and wherein the remote server is at least one of:
g) a payment gateway server;
h) a third party payment provider; and,
i) a web server.

12. A method according to any one of claims 1 to 11, wherein the method includes, in the browser application, using the executable code to:
a) identify a trigger event;
b) generate trigger elements relating to the trigger event;
c) cause the trigger elements to be displayed;
d) detect a trigger response in accordance with user input commands; and,
e) cause the payment to be performed at least partially in accordance with the trigger response.
wherein the method includes, in the browser application, displaying the trigger elements by at least one of:
f) re-rendering the payment webpage; and,
g) displaying an overlay,
wherein the method includes, in the browser application, using the executable code to identify a trigger event by:
h) determining trigger rules;
i) determining transaction properties; and,
j) identifying a trigger event using the trigger rules and the transaction properties,
and wherein the transaction properties include at least one of:
k) payment details;
l) a selected payment type;
m) a payment location;
n) a computer device location;
o) a delivery location; and,
p) a payment currency.

13. A method according to any one of claims 1 to 12, wherein the method includes, in the browser application, using the executable code to:
a) determine payment configuration data associated with the at least one additional available payment option; and,
b) determine from the payment configuration data, at least one of:
i) payment details required to perform the payment option;
ii) interaction steps required to perform the payment option; and,
iii) trigger rules,
and preferably the payment configuration data is at least one of:
c) obtained by querying a payment gateway associated with the payment option;
d) embodied in the executable code; and,
e) retrieved from a remote store.

14. A method according to any one of claims 1 to 13, wherein the method includes, in the browser application:
a) obtaining payment webpage HTML code;
b) parsing the payment webpage HTML code to construct a DOM;
c) executing Javascript code to:
i) identify the payment elements;
ii) determine the at least one additional available payment option;
iii) generate the additional payment elements; and,
iv) update the DOM with the additional payment elements; and,
d) causing the payment webpage to be displayed in accordance with the DOM,
and wherein the method includes, in the browser application:
e) parsing CSS code to construct a CSSOM tree;
f) constructing a render tree using the DOM and CSSOM tree; and,
g) causing the payment webpage to be displayed in accordance with the render tree.

15. A system for enhancing functionality of a payment webpage, the system including a client device executing a browser application configured to display the payment webpage on the client device, wherein the browser application is configured to perform the method of any preceding claim.
